# EUROPEAN PATENT APPLICATION

(11) **EP 2 315 196 A1**
(43) Date of publication of application: **27.04.2011**
(21) Application number: 10188048.2
(22) Date of filing: 19.10.2010
(51) Int. Cl.: G09G 3/34, H05B 41/295

(54) **Display apparatus and backlight unit for controlling plurality of lamps, and display driving method**

(30) Priority: 20.10.2009 KR 20090099682
(71) Applicant: SAMSUNG ELECTRONICS CO., LTD., Suwon-si Gyeonggi-do 442-742 (KR)
(72) Inventor: Agarwal, Pankaj, Gyeonggi-do Suwon-si (KR); Lee, Sang-hoon, Gyeonggi-do Suwon-si (KR)
(74) Representative: Waddington, Richard

(57) **Abstract**

A display apparatus and a backlight unit which control a plurality of lamps, and a display driving method are provided. The display apparatus includes a display, and a backlight unit which provides a backlight to the display. The backlight includes a plurality of lamps, and a lamp driver which adjusts a frequency of power supplied to the plurality of lamps until all of the plurality of lamps enter a running mode.

## Description

### 1. Field

Apparatuses and methods consistent with exemplary embodiments relate to a display apparatus and backlight unit (BLU), and more particularly, to controlling a plurality of lamps in a BLU.

### 2. Description of the Related Art

According to a related art display driving method, a frequency is adjusted so that the lamps are initially preheated and then ignited. More specifically, the related art display driving method includes setting a relatively high frequency as a preheating frequency, lowering the frequency, and applying an ignition voltage required to ignite lamps.

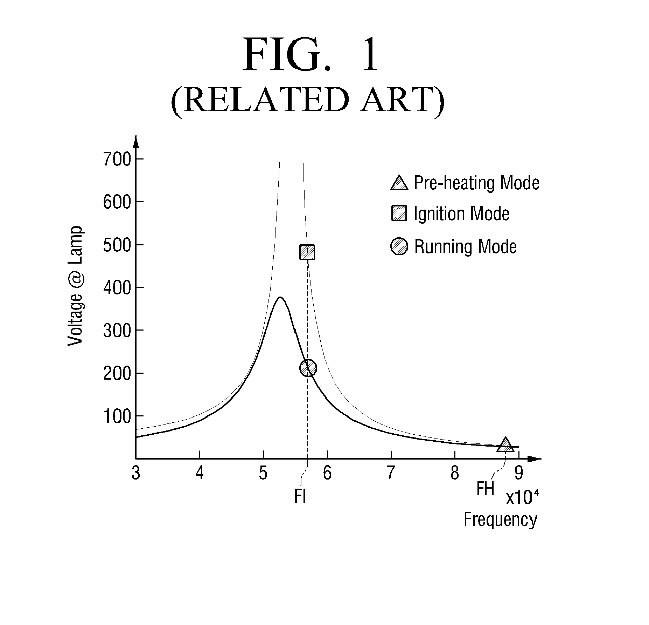

FIG. 1 is a graph explaining a related art method for driving lamps.

Referring to FIG. 1, a single lamp driver controls driving of a single lamp. In more detail, the lamp is initially preheated at a relatively high preheating frequency FH in a preheating mode. An ignition voltage required to ignite the lamp is applied to the lamp by lowering the preheating frequency FH to the ignition frequency FI in an ignition mode. Accordingly, the ignited lamp enters a running mode.

However, there has been no known attempt to control a plurality of lamps using a single lamp driver by employing the related art method. Additionally, in the related art method, it can be difficult to supply a stable current to a plurality of lamps being operated in the running mode when the ignition voltage is applied to the plurality of lamps.

In other words, when a display apparatus or a BLU includes a plurality of lamps and needs to drive the plurality of lamps at the same time, if the related art method is employed, there may be limits on development and compactness of displays, which can result in limited commercial use of displays.

### SUMMARY

One or more exemplary embodiments may address at least the above disadvantages and/or other disadvantages not described above. Also, exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

Exemplary embodiments provide a display apparatus, a backlight unit (BLU) and a display driving method, which enable a plurality of lamps to enter a running mode by applying an ignition voltage to all of the plurality of lamps, when a single lamp driver drives the plurality of lamps.

According to an aspect of an exemplary embodiment, there is provided a display apparatus including a display, and a BLU which provides light to the display. The BLU may include a plurality of lamps, and a lamp driver which adjusts a frequency of power supplied to the plurality of lamps until all of the plurality of lamps enter a running mode.

A preheating frequency of a power initially supplied to the plurality of lamps may be less than a running frequency of a power supplied to the plurality of lamps when all of the plurality of lamps enters the running mode.

The lamp driver may unidirectionally adjust the frequency of the power supplied to the plurality of lamps until all of the plurality of lamps enter the running mode.

The lamp driver may adjust the frequency by increasing the frequency from the preheating frequency to a frequency greater than a frequency corresponding to a highest ignition voltage among ignition voltages applied to the plurality of lamps.

The running mode may be a mode in which a power having a frequency greater than a frequency corresponding to a peak ignition voltage of the power supplied to the plurality of lamps is applied to the plurality of lamps.

When all of the plurality of lamps enter the running mode, the lamp driver may adjust a value of a current flowing through the plurality of lamps using a predetermined current value.

The lamp driver may adjust the value of the current by adjusting the frequency so that the value of the current may be equal to the predetermined current value.

According to an aspect of another exemplary embodiment, there is provided a method for driving a display, the method may include supplying power to all of a plurality of lamps which provide light to the display, and adjusting a frequency of the power supplied to the plurality of lamps until all of the plurality of lamps enter a running mode.

A preheating frequency of a power initially supplied to the plurality of lamps may be less than a running frequency of a power supplied to the plurality of lamps when all of the plurality of lamps enters the running mode.

The adjusting the frequency may include unidirectionally adjusting the frequency of the power supplied to the plurality of lamps until all of the plurality of lamps enter the running mode.

The adjusting the frequency may include increasing the frequency from the preheating frequency to a frequency greater than a frequency corresponding to a highest ignition voltage among ignition voltages applied to the plurality of lamps.

The running mode may be a mode in which a power having a frequency greater than a frequency corresponding to a peak ignition voltage of the power supplied to the plurality of lamps in the running mode is applied to the plurality of lamps.

The method may further include, when all of the plurality of lamps enter the running mode, adjusting a value of a current flowing through the plurality of lamps using a predetermined current value.

The adjusting the value of the current may include adjusting the frequency so that the current is equal to the predetermined current value.

According to an aspect of another exemplary embodiment, there is provided a BLU may include a plurality of lamps, and a lamp driver which adjusts a frequency of power supplied to the plurality of lamps until all of the plurality of lamps enter a running mode.

A preheating frequency of a power initially supplied to the plurality of lamps may be less than a running frequency of a power supplied to the plurality of lamps when the plurality of lamps enters the running mode.

The lamp driver may unidirectionally adjust the frequency of the power supplied to the plurality of lamps until all of the plurality of lamps enter the running mode.

When all of the plurality of lamps enter the running mode, the lamp driver may adjust a current flowing through the plurality of lamps using a predetermined current value.

The lamp driver may adjust the current by adjusting the frequency so that the current may be equal to the predetermined current value.

### BRIEF DESCRIPTION OF THE DRAWINGS

The above and other aspects will become more apparent by describing certain exemplary embodiments with reference to the accompanying drawings, in which:

FIG. 1 is a graph explaining a related art method for driving lamps;

FIG. 2A is a graph explaining a display operation method when a single lamp driver drives a single lamp according to an exemplary embodiment;

FIG. 2B is a graph explaining a display operation method when a single lamp driver drives a plurality of lamps according to an exemplary embodiment;

FIG. 3A is a block diagram illustrating the configuration of a display apparatus according to an exemplary embodiment;

FIG. 3B is a view illustrating the configuration of a BLU according to an exemplary embodiment; and

FIG. 4 is a flowchart explaining a display driving method according to an exemplary embodiment.

### DETAILED DESCRIPTION OF EXEMPLARY EMBODIMENTS

Certain exemplary embodiments are described in greater detail below with reference to the accompanying drawings.

In the following description, like reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters.

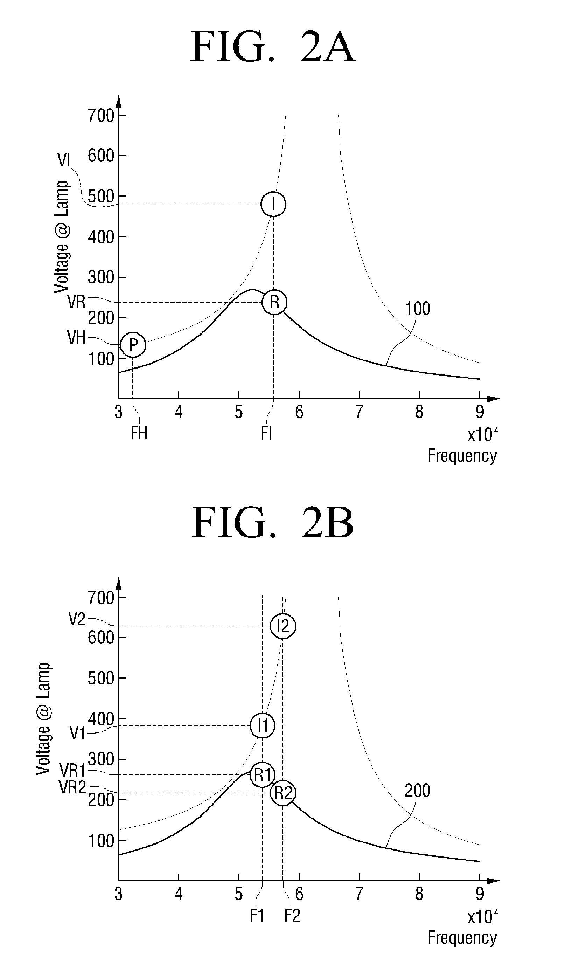

FIG. 2A and 2B are graphs explaining a display operation method according to an exemplary embodiment. Hereinafter, the display operation method is described in detail with reference to FIGS. 2A and 2B.

FIG. 2A is a graph explaining a display operation method when a single lamp driver drives a single lamp.

Referring to FIG. 2A, the lamp is preheated in a preheating mode at a relatively low frequency as a preheating frequency. The preheating frequency FH and a voltage VH applied to the lamp during the preheating mode correspond to point 'P' in FIG. 2A. After preheating the lamp, the lamp driver raises the frequency in order to apply an ignition voltage to the lamp, in the ignition mode. Accordingly, an ignition voltage VI corresponding to a higher ignition frequency FI is applied to the lamp, so that the lamp is ignited. The frequency FI and voltage VI correspond to point 'I' in FIG. 2A.

The lamp then enters the running mode, which is represented by curved line 100 shown in FIG. 2A. In the running mode, a voltage VR corresponding to a frequency VR which correspond to point 'R' in FIG. 2A is applied to the lamp, and, thus, constant current may be supplied to the lamp.

The preheating frequency may be less than the frequency in the running mode. Additionally, the preheating frequency may be greater than approximately 20 kHz.

FIG. 2B is a graph explaining a display operation method when a single lamp driver drives a plurality of lamps according to an exemplary embodiment.

Referring to FIG. 2B, the plurality of lamps are preheated at a relatively low frequency FH as a preheating frequency, as described above for FIG. 2A. When a predetermined period of time for preheating elapses after preheating is started, the lamp driver adjusts the frequency in order to apply an ignition voltage required to ignite the plurality of lamps.

The frequency may be adjusted to be increased gradually from the preheating frequency FH to a higher frequency. In other words, the frequency may be increased unidirectionally.

The lamp driver raises the frequency FH to an ignition frequency corresponding to the level of an ignition voltage required to ignite a first lamp by adjusting the frequency. In other words, the frequency is increased to a frequency level F1 as shown in FIG. 2B. The first frequency F1 and the first ignition voltage V1 for the first lamp correspond to point 'I1' in FIG. 2B.

The first lamp is then ignited and enters the running mode, which is represented by curved line 200 shown in FIG. 2B. In the running mode, a first running voltage VR1 corresponding to the first frequency F1 which correspond to 'R1' in FIG. 2B is applied to the first lamp.

However, since a second lamp may require a higher ignition voltage, the ignition voltage used for the first lamp may not be sufficient to ignite the second lamp. Accordingly, the lamp driver raises the frequency F1 to a frequency F2. The second frequency F2 and the second ignition voltage V2 for the second lamp correspond to point `I2' in FIG. 2B.

The second lamp is also ignited and then enters the running mode, which is represented by the curved line 200 shown in FIG. 2B. In the running mode, a voltage VR2 corresponding to the second frequency F2 which correspond to point `R2' in FIG. 2B is applied to both the first lamp and the second lamp.

Therefore, according to an exemplary embodiment, when the single lamp driver drives the plurality of lamps, the ignition voltage may be applied to all of the plurality of lamps, and thus the plurality of lamps may all enter the running mode.

The frequency may be adjusted to be increased to a frequency level at which the ignition voltage can be applied to all of the plurality of lamps. In more detail, the frequency may be increased from an initial frequency level to a frequency level greater than or equal to a frequency level corresponding to the highest ignition voltage among ignition voltages applied to the plurality of lamps. Herein, the initial frequency level refers to a frequency level at which the lamps are initially driven, and accordingly may be defined as a preheating frequency.

For example, the power having a frequency greater than a frequency level corresponding to a peak voltage of the power applied to the plurality of lamps be applied to the plurality of lamps in the running mode.

In other words, in the running mode, the plurality of lamps may be operated at a frequency greater than a frequency corresponding to a peak point R1 on the curved line 200 of FIG. 2B.

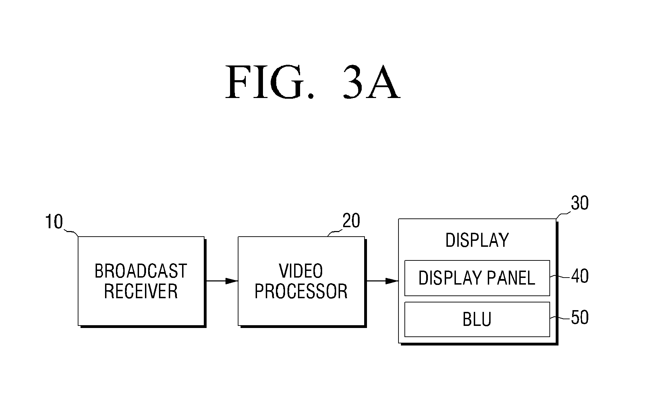

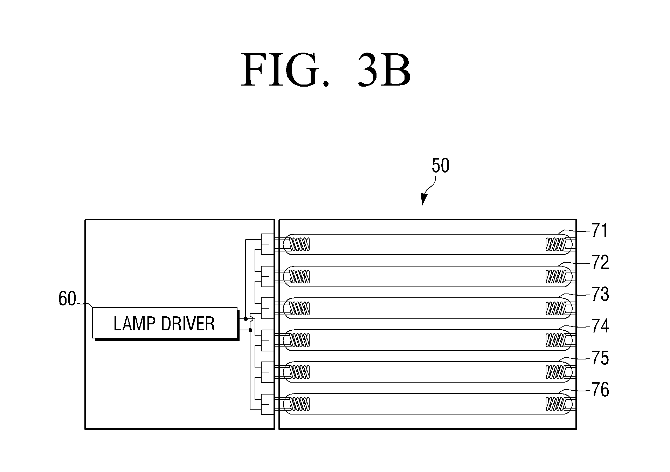

FIG. 3A is a block diagram illustrating an exemplary configuration of a display apparatus, and FIG. 3B is a view illustrating an exemplary configuration of a BLU.

As shown in FIG. 3A, the display apparatus according to an exemplary embodiment includes a broadcast receiver 10, a video processor 20, and a display 30.

The broadcast receiver 10 tunes to a channel for a broadcast received via a wired connection or wirelessly. In more detail, the broadcast receiver 10 sets one of a plurality of channels as an input channel, and receives a broadcast signal through the set input channel from an antenna (not shown).

The video processor 20 performs signal processing, such as video decoding, video scaling, or frame rate conversion (FRC), with respect to broadcast content output from the broadcast receiver 10.

The display 30 includes a display panel 40 and a BLU 50.

The display panel 40 displays the broadcast content processed by the video processor 20, and the BLU 50 projects a backlight onto the display panel 40.

Hereinafter, the BLU 50 is described in detail with reference to FIG. 3B.

As shown in FIG. 3B, the BLU 50 includes a lamp driver 60 and a plurality of lamps 71, 72, 73, 74, 75, and 76. The lamp driver 60 controls the operation of the plurality of lamps 71, 72, 73, 74, 75, and 76. In more detail, the lamp driver 60 may apply a voltage to preheat the plurality of lamps 71, 72, 73, 74, 75, and 76 or may apply an ignition voltage to ignite the plurality of lamps 71, 72, 73, 74, 75, and 76. Additionally, the lamp driver 60 may control current supply to the plurality of lamps 71, 72, 73, 74, 75, and 76 to maintain a stable current supply in the running mode.

For example, the lamps 71, 72, 73, 74, 75, and 76 may be hot cathode fluorescent lamps (HCFLs) which need to be preheated, but there is no limitation thereto. Accordingly, in another exemplary embodiment, any lamp with the preheating operation may be used instead of HCFLs.

As described above, the six lamps 71, 72, 73, 74, 75, and 76 are driven by only the single lamp driver 60 in an exemplary embodiment, but this is merely exemplary. Accordingly, it will be understood that the number of lamps driven by a single lamp driver may be greater or fewer than six.

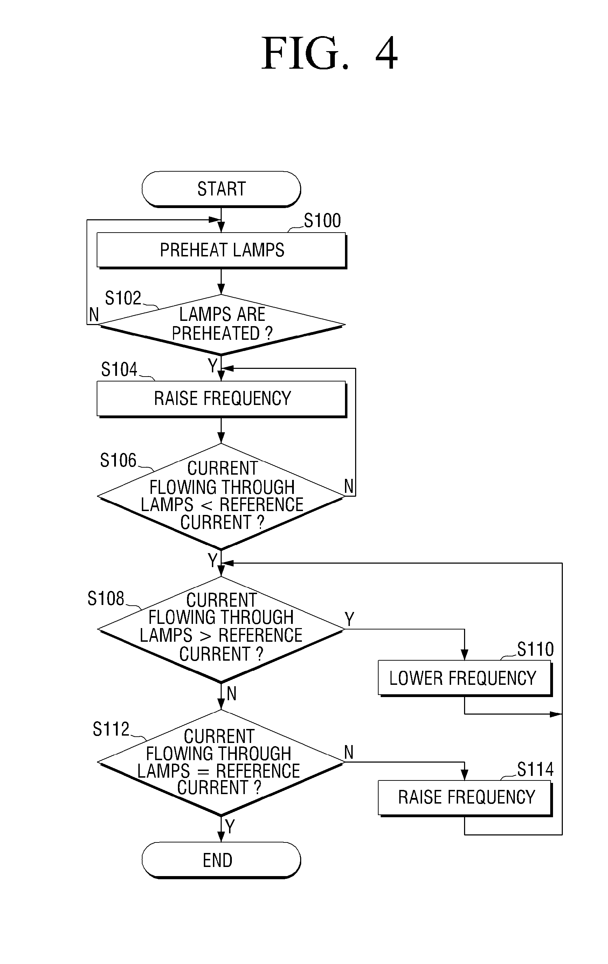

FIG. 4 is a flowchart explaining a display driving method according to an exemplary embodiment.

First, a voltage is applied to a plurality of lamps to preheat the plurality of lamps (S100). As described above, preheating is performed at a relatively low frequency in an exemplary embodiment. In more detail, a preheating frequency of the power initially applied to the plurality of lamps may be less than a running frequency of the power provided when the plurality of lamps enters the running mode.

After a predetermined period of time for preheating elapses, the lamp driver 60 determines whether the plurality of lamps are preheated (S102). For example, the predetermined period of time may be defined as a period of time sufficient to preheat all of the plurality of lamps. If it is determined that all of the plurality of lamps are not preheated during the predetermined period of time (S102-N), the lamp driver 60 extends the preheating time until all of the plurality of lamps are completely preheated.

If it is determined that all of the plurality of lamps are preheated (S 102-Y), the lamp driver 60 raises the frequency in order to apply the ignition voltage to ignite the plurality of lamps (S104). In operation S104, the frequency is increased gradually from the preheating frequency to the first frequency F1 shown in FIG. 2B.

Subsequently, the lamp driver 60 detects a value of a current flowing through the lamps, and compares the detected current value to a reference current value (S104). For example, the reference current may be a current which can completely ignite all of the plurality of lamps.

If the detected current value is less than the reference current value as a result of comparison (S106-Y), the lamp driver 60 raises the frequency (S104). In more detail, the detected current value which is less than the reference current value indicates that some lamps are not ignited yet. Accordingly, the lamp driver 60 applies a higher voltage to these lamps by raising the frequency. Referring to FIG. 2B, the lamp driver 60 further raises the frequency so that the first frequency F1 is increased to the second frequency F2. Accordingly, a voltage corresponding to the increased frequency may be applied to the lamps that are not yet ignited, so that all of the lamps become completely ignited.

Alternatively, when the detected current value is greater than the reference current value (S106-N), this indicates that the ignition voltage is applied to all of the plurality of lamps, and each of the plurality of lamps is in the running mode. Accordingly, the lamp driver 60 starts to stabilize the current in the running mode.

The current flowing through the plurality of lamps may be maintained constant in the running mode, in order to stably drive a circuit. For example, the lamp driver 60 may maintain the current at the reference current value or at another appropriate value.

The lamp driver 60 again detects the current value flowing through the lamps in the running mode and compares a value at the running mode current to the reference current value (S108). If the running mode current value is greater than the reference current value as a result of comparison (S108-Y), the lamp driver 60 lowers the frequency so that the current value flowing through the lamps is reduced (S 110).

Alternatively, if the running mode current value is less than the reference current value (S108-N), the lamp driver 60 determines whether the running mode current value is equal to the reference current value (S 112).

If it is determined that the running mode current value is not equal to the reference current value (S112-N), that is, if the running mode current value is less than the reference current value, the lamp driver 60 again raises the frequency (S 114). Therefore, the lamp driver 60 may drive the plurality of lamps using a desired current value by repeating the above described process. Also, the lamp driver may monitor the current value in the running mode and adjust the current value based on a predetermined current value by increasing or lowering the frequency of the power supplied to the plurality of lamps.

The display driving method of FIG. 4 is merely an exemplary embodiment, and, accordingly, in other exemplary embodiments, various methods may be used to adjust the frequency, rather than raising the frequency. The preheating frequency may be relatively low, and thus the frequency may be adjusted to be unidirectionally increased.

As described above, according to exemplary embodiments, a BLU for controlling a plurality of lamps using only a single lamp driver may apply an ignition voltage to the plurality of lamps, so that all of the plurality of lamps may enter a running mode. Therefore, it is possible to maintain stable current supply to the plurality of lamps being operated in the running mode.

The foregoing exemplary embodiments and advantages are merely exemplary and are not to be construed as limiting. The present teaching can be readily applied to other types of apparatuses. Also, the description of exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display; and
a backlight unit, BLU, which provides a backlight to the display,
wherein the BLU comprises:
a plurality of lamps; and
a lamp driver which adjusts a frequency of power supplied to the plurality of lamps until all of the plurality of lamps enter a running mode.

2. The display apparatus as claimed in claim 1, wherein a preheating frequency of the power initially supplied to the plurality of lamps is less than a running frequency of the power supplied to the plurality of lamps when the plurality of lamps enter the running mode.

3. The display apparatus as claimed in claim 2, wherein the lamp driver unidirectionally adjusts the frequency of the power supplied to the plurality of lamps until all of the plurality of lamps enter the running mode.

4. The display apparatus as claimed in claim 3, wherein the lamp driver adjusts the frequency so that the frequency is increased from the preheating frequency to a frequency greater than a frequency corresponding to a highest ignition voltage among ignition voltages applied to the plurality of lamps.

5. The display apparatus as claimed in claim 3 or 4, wherein the running mode is a mode in which a power having a frequency greater than a frequency corresponding to a peak ignition voltage of the power supplied to the plurality of lamps is applied to the plurality of lamps.

6. The display apparatus as claimed in any one of claims 1 to 5, wherein when all of the plurality of lamps enter the running mode, the lamp driver adjusts a value of a current flowing through the plurality of lamps using a predetermined current value.

7. The display apparatus as claimed in claim 6, wherein the lamp driver adjusts the value of the current by adjusting the frequency so that the value of the current is equal to the predetermined current value.

8. A method for driving a display, the method comprising:
supplying power to all of a plurality of lamps which provide a backlight to the display; and
adjusting a frequency of the power supplied to the plurality of lamps until all of the plurality of lamps enter a running mode.

9. The method as claimed in claim 8, wherein a preheating frequency of the power initially supplied to the plurality of lamps is less than a running frequency of the power supplied to the plurality of lamps when the plurality of lamps enter the running mode.

10. The method as claimed in claim 9, wherein the adjusting the frequency comprises unidirectionally adjusting the frequency of the power supplied to the plurality of lamps until all of the plurality of lamps enter the running mode.

11. The method as claimed in claim 10, wherein the adjusting the frequency comprises adjusting the frequency so that the frequency is increased from the preheating frequency to a frequency greater than a frequency corresponding to a highest ignition voltage among ignition voltages applied to the plurality of lamps.

12. The method as claimed in claim 10 or 11, wherein the running mode is a mode in which the power having a frequency greater than a frequency corresponding to a peak ignition voltage of the power supplied to the plurality of lamps in the running mode is applied to the plurality of lamps.

13. The method as claimed in any one of claims 8 to 12, further comprising, when all of the plurality of lamps enter the running mode, adjusting a value of current flowing through the plurality of lamps using a predetermined current value.

14. The method as claimed in claim 13, wherein the adjusting the value of the current comprises adjusting the frequency so that the value of the current is equal to the predetermined current value.
